# EUROPEAN PATENT APPLICATION

(11) **EP 1 849 689 A2**
(43) Date of publication of application: **31.10.2007**
(21) Application number: 07251792.3
(22) Date of filing: 28.04.2007
(51) Int. Cl.: B62D 33/07

(54) **Fastening mechanisms for tilting cabs on vehicles**

(30) Priority: 29.04.2006 GB 0608571
(71) Applicant: Bloxwich Engineering Limited, Leamore Industrial Estate, Bloxwich Walsall WS2 7LZ (GB)
(72) Inventor: Golar, Jagjit, Birmingham B28 8SZ (GB); Kirk, Simon Thomas, Willenhall WestMidlands WV13 5PZ (GB)
(74) Representative: Wightman, David Alexander

(57) **Abstract**

A fastening mechanism 10 for a tilting cab 4 of a vehicle 2 has a housing 14 in which a retainer 12 is pivotally mounted to engage a striker 16 received in a slot 36 to secure the cab 4 relative to the chassis 6 of the vehicle. Operative elements of the fastening mechanism 10 are located and supported within a plastics shroud 18 that protects the elements from the surrounding environment and inhibits ingress of dirt or rain.

## Description

This invention concerns improvements in or relating to fastening mechanisms for tilting cabs on vehicles.

It is common practice in commercial vehicles having forwardly mounted engines to mount the cab on the chassis for pivotal movement about a hinge axis at the forward or front end of the cab so that the cab can be tilted forwards from its normal position to provide access to the engine and ancillary components. The cab is retained in the normal position by a fastening mechanism that can be released when it is desired to tilt the cab forwards.

One type of fastening mechanism comprises a striker on one of the cab and chassis that is arranged to co-operate with a retainer on the other of the cab and chassis to secure the cab in its normal position. The retainer may comprise a pivotally mounted catch lever movable between an operative position in which the striker is retained to secure the cab relative to the chassis and an inoperative position in which the striker is released to permit pivotal movement of the cab relative to the chassis.

Typically, the striker is received in an entry slot that guides the striker to engage the catch lever and pivot the catch lever to its operative retaining position. The catch lever is usually held in the operative position by a locking lever that engages the catch lever in the operative position and is disengaged by a release mechanism to allow the catch lever to move to the inoperative position releasing the striker.

The known fastening mechanism of this type are typically located at positions where they are exposed to the elements and, over time, the operation of the mechanism can be adversely affected by ingress of dirt and rain. In particular, movable parts of the fastening mechanism may stick or jam due to loss of lubrication and/or corrosion.

This may inhibit release of the fastening mechanism when it is desired to access the engine for servicing or repairs and/or may result in accidental tilting of the cab if the fastening mechanism has not been properly engaged, for example under hard braking or in a collision. Accordingly, the existing fastening mechanisms may require replacement at regular intervals which adds to operating costs both for the supply and fitting of the fastening mechanism and downtime while the vehicle is out of service and the fastening mechanism is replaced.

The existing fastening mechanisms of the above type are also susceptible to damage in a collision leading to release of the fastening mechanism and forward tilting of the cab. In particular, the catch lever and locking lever may be subjected to twisting forces from the impact in a collision that can result in the levers crossing over one another releasing the catch lever for pivotal movement to its inoperative position releasing the striker and allowing the cab to pivot to its forward tilted position.

The present invention has been made from a consideration of the foregoing problems and disadvantages of the existing fastening mechanisms and seeks to provide a fastening mechanism for the tilting cab of a vehicle which overcomes or mitigates some or all of the disadvantages.

Thus, according to a first aspect of the present invention, there is provided apparatus for securing a tilting cab of a vehicle relative to a chassis comprising a striker adapted for mounting on one of the cab and chassis and a fastening mechanism adapted for mounting on the other of the cab and chassis, the fastening mechanism including a retainer cooperable with the striker to secure the cab in its normal position, wherein the retainer is pivotally mounted in a housing is configured to form a shroud for the retainer and associated parts of the fastening mechanism.

By this invention, the retainer and associated parts of the fastening mechanism are protected from the surrounding environment when the apparatus is mounted on the vehicle. As a result, the effects of dirt and rain on the operating performance and life of the fastening mechanism are substantially reduced.

Preferably, the retainer comprises a pivotally mounted catch lever movable between an operative position in which the striker is retained to secure the cab relative to the chassis and an inoperative position in which the striker is released to permit pivotal movement of the cab relative to the chassis.

Preferably, the striker is received in an entry slot that guides the striker to engage the catch lever and pivot the catch lever to its operative retaining position against the biasing of a return spring.

Preferably, the catch lever is held in the operative position against the biasing of the return spring by a spring loaded locking lever and release means is provided to release the catch lever for pivotal movement to the inoperative position releasing the striker.

Preferably, the housing includes a pair of plastic cover members that form a shroud for the catch lever, locking lever and release means. The cover members are preferably provided with formations for locating the catch lever, locking lever and release means. The cover members preferably provide support for the catch lever and locking lever to maintain alignment therebetween.

Preferably, the cover members are located between a pair of parallel, spaced apart metal plates that strengthen and reinforce the housing.

According to a second aspect of the present invention, there is provided apparatus for securing a tilting cab of a vehicle relative to a chassis comprising a housing for a catch lever and a locking lever for securing the catch lever in an operative position, the housing comprising means for supporting both sides of the catch lever and locking lever for pivotal movement of the levers.

By this invention, the support means counters the effect of twisting forces such as may arise in a collision so as to maintain the alignment of the levers and prevent accidental or inadvertent release of the catch lever.

Preferably, the housing has opposed abutment surfaces that provide lateral support for the catch lever and locking lever in the engaged operative position of the catch lever.

Preferably, the housing comprises a shroud for the catch lever and locking lever that locates and protects the levers from ingress of dirt and rain with the abutment surfaces provided by the shroud.

Preferably, the shroud is formed in two parts that fit together to locate and retain the levers therebetween. In a preferred arrangement, the shroud made of plastics material with integral formations for locating and retaining the levers.

Preferably, the shroud is located between a pair of parallel, spaced apart metal plates that provide support for and strengthen the shroud.

Preferably, the housing is adapted for mounting on one of the cab and vehicle chassis and the catch lever is configured to locate and retain a striker adapted for mounting on the other of the cab and chassis to secure the cab relative to the chassis.

Preferably, the catch lever is biased towards an inoperative position and is retained in the operative position by the locking lever.

Preferably, the locking lever is biased to engage the catch lever in the operative position and is pivotal to release the catch lever by an actuator such as piston/cylinder device.

The invention will now be described in more detail, by way of example only, with reference to the accompanying drawings wherein:
**Figure 1** is a perspective view showing the location of the fastening mechanism of the present invention in a vehicle having a tiltable cab, the cab being shown in the forward tilted position;
**Figure 2** is a perspective view of the fastening mechanism shown in Figure 1 with the retainer shown in its operative position engaging the striker;
**Figure 3** is a longitudinal sectional view of the fastening mechanism shown in Figure 2;
**Figure 4** is a section on the line 4-4 of Figure 3; and
**Figure 5** is an exploded perspective view of parts of the fastening mechanism shown in Figures 1 to 4.

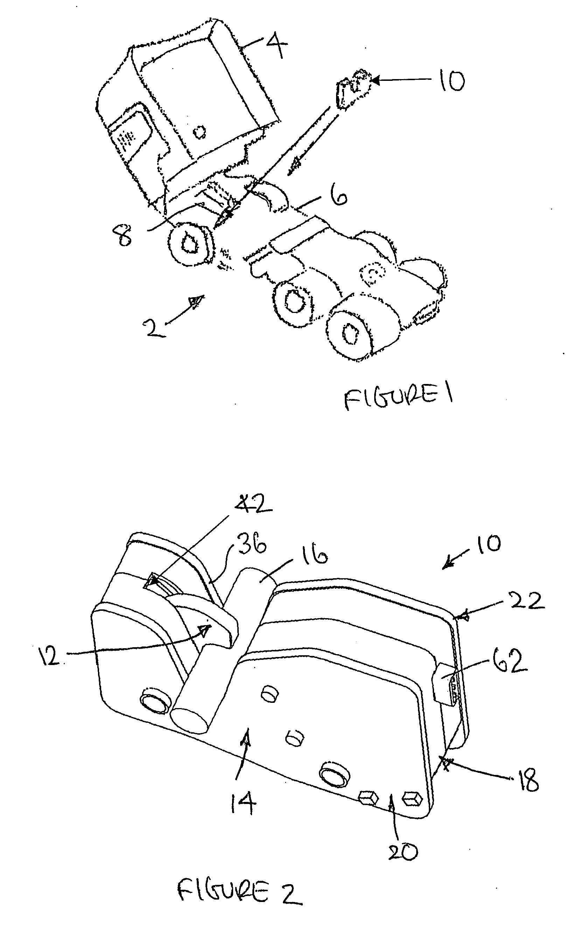

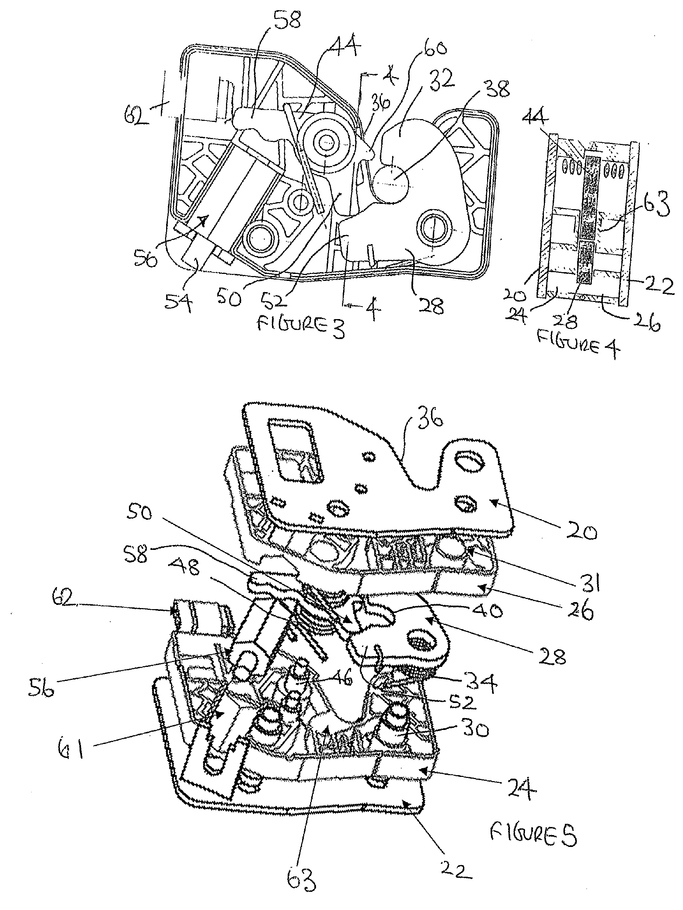

Referring first to Figure 1 of the drawings, there is depicted a vehicle 2 having a cab 4 mounted on a chassis 6 of the vehicle at a forward or front end of the cab 4 for pivotal movement between a forward tilted position shown in Figure 1 that allows access to an engine compartment 8 for service or repair and a normal position (not shown) in which the cab 4 locates over and conceals the engine compartment 8 when the vehicle 2 is in use. The cab 4 is releasably secured on each side of the vehicle in the normal position by means of a respective fastening mechanism 10 shown in more detail in Figures 2 to 5.

Referring now to Figures 2 to 5, each fastening mechanism 10 comprises a retainer 12 pivotally mounted in a housing 14 that is secured to the vehicle chassis 6 and is engageable with a striker 16 that is secured to the cab 4 to secure the cab in its normal position. In a modification (not shown), the housing 14 is secured to the cab 4 and the striker 16 is secured to the chassis 6.

The housing 14 comprises a plastic shroud 18 located between a pair of parallel, spaced apart metal plates 20,22 that are secured together by fasteners extending through the shroud 18. The shroud 18 comprises two parts 24,26 formed as plastic mouldings that fit together face to face with the retainer 12 and associated parts of the fastening mechanism located therebetween by means of cooperating formations on the parts 24,26.

The retainer 12 comprises a catch lever 28 pivotally mounted on a peg 30 integral with the part 24. The free end of the peg 30 is received in a hole 31 in the part 26. The catch lever 28 has a hook 32 at one end and is biased by a torsion spring 34 mounted on the peg 30 to an inoperative position (not shown) in which the hook 32 is clear of an entry slot 36 in the housing 14.

The striker 16 comprises a cylindrical pin 38 that is received in the entry slot 36 in the housing 14 and engages a notch 40 in the catch lever 28 to pivot the lever 28 against the biasing of torsion spring 34 from the inoperative position to an operative position in which the hook 32 projects from an opening 42 in the shroud 18 to extend across the slot 36 and retain the pin 38 in the slot 36.

A locking lever 44 is pivotally mounted on a peg 46 integral with the part 24 and is biased by a torsion spring 48 mounted on the lug 46 to an operative position in which an arm 50 of the lever 44 engages a leg 52 of the catch lever 28 to maintain the catch lever 28 in the operative position.

The locking lever 44 is pivotal in an anticlockwise direction from the operative engaged position shown in Figure 3 by extending a piston 54 of a hydraulically operable piston/cylinder device 56 to engage arm 58 of the lever 44 and release the catch lever 28 for pivotal movement to the inoperative position under the biasing of the torsion spring 34 and allow the pin 38 to be withdrawn from the slot 36. It will be understood that other means of operating the piston/cylinder device are contemplated and within the scope of the invention, for example an electrically operable piston/cylinder device.

A finger 60 on the locking lever 44 is engaged by the leg 52 of the catch lever 28 in the inoperative position to locate the catch lever 28 in the inoperative position. The piston/cylinder device 56 is received in opposed recesses 61 (one only shown) in the parts 24,26 and is actuated by a microswitch 62 located between the parts 24,26 and operable from a suitable location on the vehicle. It will be understood that other methods of locating the micro switch are contemplated and within the scope of the invention, for example the micro switch may be mounted to one of the housing parts or incorporated (moulded) into one of the housing parts.

As will be appreciated, the shroud 18 provides an enclosure for the catch lever 28 and associated parts of fastening mechanism 10 that protects the component parts of the fastening mechanism 10 from dirt, rain and other sources of detritus and contamination that may affect operation of the fastening mechanism.

In particular, the parts 24,26 of the shroud fit together to form a seal at the peripheral edge of the shroud 18 to inhibit ingress of dirt or rain. The hook 32 is a close fit in the opening 42 in the shroud 18 so that ingress of dirt and rain through the opening 42 is also inhibited in both the operative and inoperative positions of the catch lever 28.

Furthermore, it will be appreciated that the shroud 18 also provides support for both sides of the catch lever 28 and the locking lever 44 so that the alignment of both levers 28,44 is maintained and lateral movement of the levers 28,44 relative to one another is inhibited.

In particular, the parts 24,26 have opposed abutment surfaces 63 (one only shown) that provide lateral support for the levers 28,44 in the operative engaged position. As a result, accidental release the catch lever 28 due to the levers 28,44 crossing over when subjected to twisting forces such as may arise in a collision is prevented.

It will be understood that the invention is not limited to the above-described embodiment and that the benefits and advantages of providing the housing with a shroud to protect the catch lever and associated parts of the fastening mechanism from the surrounding environment may be employed in other designs of fastening mechanisms.

## Claims

1. Apparatus for securing a tilting cab of a vehicle relative to a chassis comprising a striker adapted for mounting on one of the cab and chassis and a fastening mechanism adapted for mounting on the other of the cab and chassis, the fastening mechanism including a retainer cooperable with the striker to secure the cab in its normal position, wherein the retainer is pivotally mounted in a housing configured to form a shroud for the retainer and associated parts of the fastening mechanism.

2. Apparatus according to claim 1 wherein, the retainer comprises a pivotally mounted catch lever movable between an operative position in which the striker is retained to secure the cab relative to the chassis and an inoperative position in which the striker is released to permit pivotal movement of the cab relative to the chassis.

3. Apparatus according to claim 2 wherein, the striker is received in an entry slot that guides the striker to engage the catch lever and pivot the catch lever to its operative retaining position against the biasing of a return spring.

4. Apparatus according to claim 3 wherein, the catch lever is held in the operative position against the biasing of the return spring by a spring loaded locking lever and release means is provided to release the catch lever for pivotal movement to the inoperative position releasing the striker.

5. Apparatus according to claim 4 wherein the release means comprises a piston/cylinder device.

6. Apparatus according to claim 4 or claim 5 wherein, the shroud includes a pair of plastic cover members.

7. Apparatus according to claim 6 wherein the cover members are provided with integral formations for locating the catch lever, locking lever and release means.

8. Apparatus according to claim 6 or claim 7 wherein the cover members have opposed abutment surfaces that provide lateral support for the catch lever and locking lever.

9. Apparatus according to any of claims 6 to 8 wherein, the cover members are located between a pair of parallel, spaced apart metal plates that strengthen and reinforce the housing.

10. Apparatus according to any of claims 6 to 9 wherein the cover members form a seal at the peripheral edge of the shroud.
